# EUROPÄISCHE PATENTSCHRIFT

(11) **EP 1 486 313 B1**
(45) Veröffentlichungstag und Bekanntmachung des Hinweises auf die Patenterteilung: **23.11.2005**
(21) Anmeldenummer: 04013458.7
(22) Anmeldetag: 08.06.2004
(51) Int. Cl.: B29C 51/04, B29C 51/26

(54) **Formwerkzeug zum Tiefziehen von Behältern aus thermoplastischen Kunststoff**
Apparatus for thermoforming of thermoplastic container
Appareil pour thermoformage de récipients en thermoplastique

(30) Priorität: 13.06.2003 DE 10326670
(43) Veröffentlichungstag der Anmeldung: 15.12.2004
(73) Patentinhaber: Adolf Illig Maschinenbau GmbH & Co. KG, 74081 Heilbronn (DE)
(72) Erfinder: Trautwein, Herbert, 71737 Kirchberg (DE)

(56) Entgegenhaltungen:
- EP-A- 1 103 365
- EP-A- 1 297 943
- DE-U- 20 116 922

## Beschreibung

Die Erfindung geht aus von einem Formwerkzeug nach dem Oberbegriff des Anspruches 1. Mit diesem werden aus einer erwärmten Folienbahn aus thermoplastischem Kunststoff Behälter mittels Druckluft tiefgezogen und ggf. ausgestanzt.

Aus der EP-A-1103365 und der DE 201 16 922 U1 sind derartige Formwerkzeug bekannt, bei denen jeder Vorstrecker als Kolben ausgebildet bzw. mit einem Kolben verbunden ist, der in der Niederhalterbohrung gleitend und zumindest im unteren Bereich dichtend geführt ist. Die Druckluft zur Formung der Behälter wird durch die Stange des Streckhelfers oder über - im unteren Bereich des Niederhalters angeordnete - Austrittsöffnungen zugeführt. Der Grund dieser Ausbildung liegt darin, dass Druckluft zum Formen der Behälter eingespart werden soll, indem der Innenraum des Niederhalters hinter dem Streckhelfer beim Zuleiten der Druckluft nicht mit dieser gefüllt werden muss, sondern einen niedrigeren Druck aufweisen kann. Zudem wird die Taktzahl durch diese Maßnahme positiv beeinflusst, da das geringere Volumen rascher gefüllt ist und dadurch der Formdruck in kürzerer Zeit aufbaut wird.

In DE 102 11125 A1 ist ein Sperrkolben beschrieben, der eine Dichtung trägt und der in der Niederhalterbohrung hinter dem Streckhelfer und relativ zu diesem verschiebbar geführt ist. Dadurch wird ebenfalls eine Formlufteinsparung erzielt und diese Gestaltung bringt verschiedene in dieser Schrift beschriebene Vorteile.

Nachteile bei diesen beiden prinzipiellen Ausbildungen des Streckhelfers liegen darin, dass die Dichtung im Streckhelfer bzw. im Sperrkolben durch die Reibung an der Niederhalterbohrung - zumindest auf ihrem Weg im unteren Bereich - verschleißt und somit erhöhte Wartungszeiten und -kosten entstehen sowie erhöhte Antriebskräfte erforderlich sind. Auch kann ein entstehender Abrieb des Dichtungsmaterials auf direktem Wege in die tiefgezogenen Produkte gelangen und diese verunreinigen. Das Entlüften der Formluft erfolgt bekannterweise über dieselben Leitungen, die der Zufuhr dienen. Dies dauert relativ lange.

Der Erfindung liegt die Aufgabe zugrunde, die geschilderten Nachteile des Standes der Technik zu überwinden unter Beibehaltung des Vorteiles einer Drucklufteinsparung und eines raschen Druckaufbaues der Formluft. Die Reibung der im Streckhelfer bzw. im Sperrkolben eingelegten Dichtung und damit die Antriebskräfte, der Abrieb, die Wartungskosten und die Verschmutzungsgefahr der tiefgezogenen Behälter sollten verringert werden. Das Entlüften der Formluft sollte beschleunigt werden.

Gelöst ist diese Aufgabe erfindungsgemäß durch die im Kennzeichen des Hauptanspruchs angegebenen Maßnahmen.

Weitere bevorzugte Ausgestaltungen der Erfindung ergeben sich aus den übrigen, in den Unteransprüchen genannten Merkmalen.

Das Formwerkzeug ist anhand der schematischen Zeichnungen näher beschrieben. Es zeigt:
- Figur 1: einen Querschnitt durch das Formwerkzeug in geschlossener Stellung vor Einleitung des Tiefziehvorganges.
- Figur 2 - 4: einen Querschnitt durch das Formwerkzeug mit zusätzlichem Sperrkolben in verschiedenen Phasen des Tiefziehprozesses.
- Figur 5 - 7: verschiedene Ausführungsformen der Dichtung an Streckhelfer bzw. Sperrkolben.

Das Formwerkzeug besteht aus dem Oberteil 1 und dem Unterteil 2. Letzteres umfasst eine Grundplatte 3, einen Kühlblock 4 und in diesen pro Formnest eingesetzte Formeinsätze 5 einreihig wie dargestellt oder mehrreihig mit der Gestalt, der:herzustellenden Behälter 6. Die Formeinsätze 5 sind einteilig oder zweiteilig ausgebildet und tragen bei kombiniert formenden und stanzenden Formwerkzeugen an der oberen, der Folienbahn 7 zugewandtem Seite, eine Schnittkante 8. Eine Kühlung der Formeinsätze 5 erfolgt über die Kammer 9 zwischen Kühlblock 4 und Außenform der Formeinsätze 5 in bekannter Weise. Zum Ausschieben der Behälter 6 aus den Formeinsätzen 5 dient ein verschiebbarer Formboden 10.

Das Oberteil 1 setzt sich zusammen aus einer Kopfplatte 11, einer Zwischenplatte 12, der Matrize 13 und einem in jedem Formnest angeordneten Niederhalter 14 mit in dessen Bohrung 19 verschiebbarem Streckhelfer 15. Jeder Niederhalter 14 ist federnd nachgiebig gehalten und schiebt nach dem Ausstanzen der Behälter 6 und nach dem Öffnen des Formwerkzeuges diese aus der Matrizenbohrung. Gemäß einer ersten Ausführungsform ist die Zwischenplatte 12 mit Bohrungen 34 ausgerüstet, von denen aus die Formluft auf die Formnester verteilt wird. Die Bohrungen 34 münden in Bohrungen 33, die zu einer Ringnut 32 in der Wandung des Niederhalters 14 führen. Von dieser Ringnut 32 aus führen längs in der Niederhalterwandung verlaufende Nuten 35 zu schräg verlaufenden, mehrfach am Umfang angeordneten Bohrungen 36, die die Formluft in den Formraum 31 leiten.

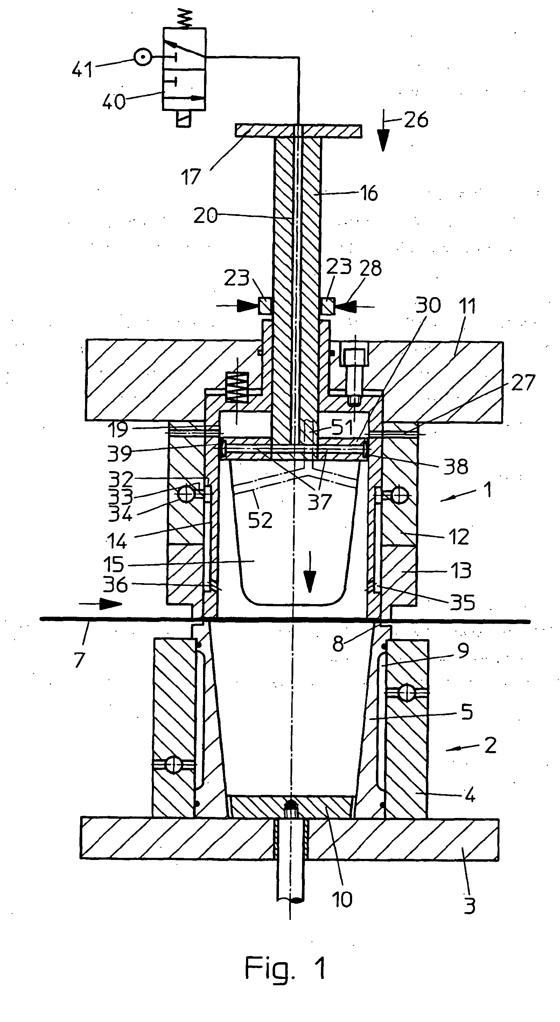

Die Streckhelfer 15 sind gemäß einer ersten Ausführungsform - dargestellt in Figur 1 - an einer Sperrplatte 30 befestigt und über eine Stange 16 mit einer gemeinsamen Halteplatte 17 verbunden. Diese kann über eine als Pfeil dargestellte Antriebseinrichtung 26 verschoben werden. In der Sperrplatte 30 ist eine ringsum verlaufende Nut 38 vorgesehen, in der eine Dichtung 39 sitzt. Zur Innenseite der Dichtung 39 führen Bohrungen 37, die mit einer zentralen Bohrung 20 in der Stange 16 in Verbindung stehen. Über ein Ventil 40 kann die Bohrung 20 zeitweise mit einer Druckluftquelle 41 in Verbindung gebracht werden. Die nähere Gestaltung und Wirkungsweise der Dichtung 39 sind später beschrieben.

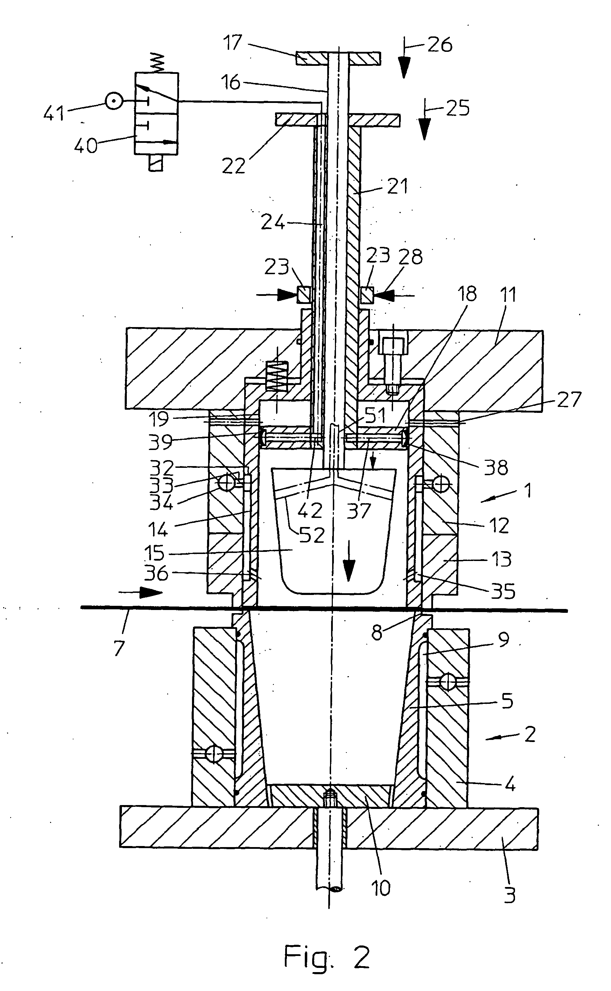

Gemäß einer zweiten Ausführungsform - dargestellt in den Figuren 2 bis 4 - besteht die Streckhelfereinrichtung aus dem eigentlichen Streckhelfer 15 und einem Sperrkolben 18, der hinter dem Streckhelfer 15 angeordnet und zu diesem verschiebbar ausgebildet ist. Der Sperrkolben 18 ist an einem Rohr 21 befestigt, in dessen Inneren die Stange 16 des Streckhelfers 15 verläuft. Alle Rohre 21 der in den Formnestem angeordneten Sperrkolben 18 sind an einer gemeinsamen Halteplatte 22 befestigt. Diese Halteplatte 22 ist mit einer durch den Pfeil 25 angedeuteten Antriebseinrichtung verbunden, mit der sie - unabhängig von der Verschiebung der Halteplatte 17 für die Streckhelfer 15 - verschoben werden kann. Über eine axiale Bohrungen 24 im Rohr 21 und über die Ringnut 42 sowie mehrere radiale Bohrungen 37 kann zeitweise Druckluft über das Ventil 40 auf die Innenseite der Dichtung 39 geführt werden, die in eine Nut 38 im Sperrkolben 18 eingelegt ist.

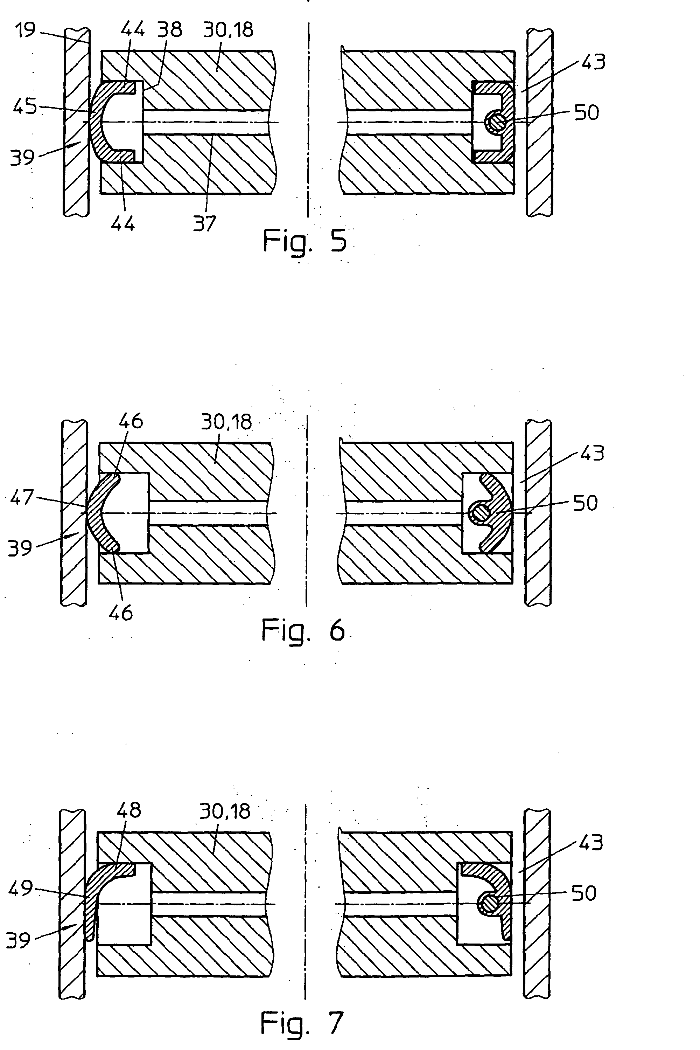

Bei beiden Ausführungsformen des Formwerkzeuges ist es in einer Abwandlung der Formluftführung möglich, diese über eine Bohrung 51 in der Stange 16 und Öffnungen 52 im Streckhelfer 15, wie es in den Figuren 1 und 2 strichpunktiert angedeutet ist, zu- bzw. abzuleiten. Es besteht dann die Möglichkeit, die Formluft über die Bohrungen 36 zuzuführen und über dieselben Bohrungen 36 und die Öffnungen 52 abzuleiten, wie es bei einer Dichtungsgestalt nach Figur 7 sinnvoll ist. Dies hat einen besonders raschen Druckabbau der Formluft zur Folge.

Verfahrensmäßig findet in der Ausführungsform des Formwerkzeuges gemäß Figur 1 folgender Ablauf statt:

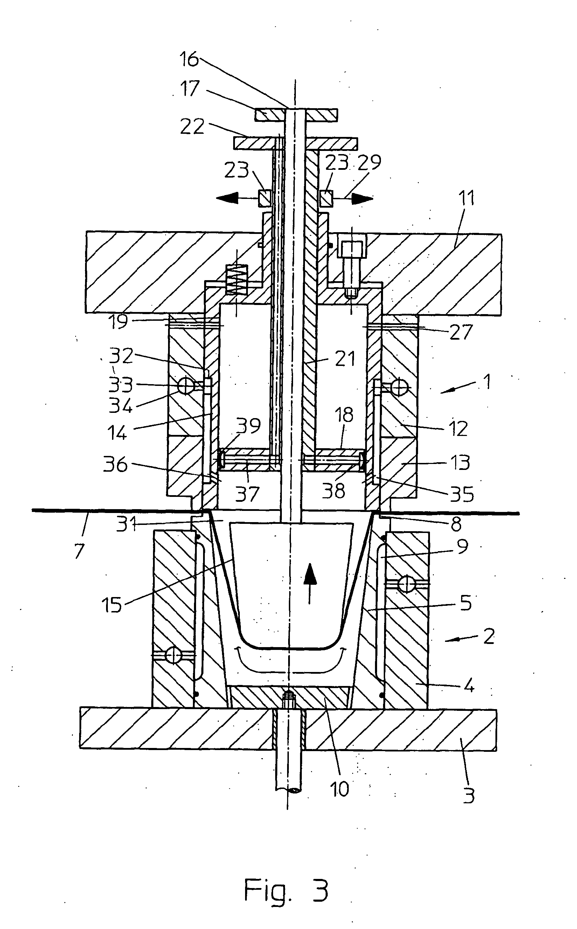

Nach dem Eintransport eines Abschnittes der erwärmten Folienbahn 7 zwischen die geöffneten Werkzeughälften 1, 2 wird dieses geschlossen. (Lage in Fig. 1 dargestellt). Jetzt wird der Streckhelfer 15 über die Antriebseinrichtung 26 nach unten bewegt bis in die Stellung, die in Figur 3 bei der zweiten Ausführungsform dargestellt ist. Gleichzeitig mit der nun einsetzenden Zufuhr der Formluft über die Bohrungen 36 im Niederhalter 14 wird eine Sperreinrichtung 23 aktiviert (Pfeilrichtung 28), sodass sie den Streckhelfer 15 arretiert. Über die Bohrungen 20, 37 wird Druckluft auf die Innenseite der Dichtung 39 gegeben, die sich beim Druckaufbau nach außen verformt oder verschiebt und den Spalt (Größenordnung 0,5 - 3 mm) zwischen dem Streckhelfer 15 und der Niederhalterbohrung 19 schließt. Je nach den optimalen Verfahrensanforderungen für den zu formenden Behälter 6 kann eine Weiterfahrt des Streckhelfers 15 während der Formluftzufuhr, wie strichpunktiert in Fig. 3 angedeutet, erfolgen. Der Bedarf an Formluft ist minimiert, da der Raum innerhalb des Niederhalters 14 nicht gefüllt werden muss, bedingt durch die aktivierte Dichtung 39 in der Sperrplatte 30 des Streckhelfers 15. Nach dem Ausformen der Behälter 6 wird die Innenseite der Dichtung 39 über das Ventil 40 entlüftet. Es erfolgt nun ein sehr rascher Abbau der Formluft im Formraum 31, da diese einerseits durch die Bohrungen 36 abgeleitet werden kann, andererseits aber auch über die entlastete Dichtung 38 und den Spalt 43 zwischen Sperrplatte 30 und Niederhalterbohrung 19 hinwegströmt und über die Entlüftungsbohrungen 27 ins Freie geleitet wird. Die Sperreinrichtung 23 wird gelöst (Pfeilrichtung 29) und der Streckhelfer 15 wird zurückbewegt.

Verfahrensmäßig findet in der Ausführungsform gemäß den Figuren 2 bis 4 folgender Ablauf statt:

Nach dem Eintransport eines Abschnittes der erwärmten Folienbahn 7 zwischen die geöffneten Werkzeughälften 1, 2 wird dieses geschlossen. (in Fig. 2 dargestellt). Jetzt werden gleichzeitig der Streckhelfer 15 und der Sperrkolben 18 nach unten bewegt über die Antriebseinrichtungen 25, 26 bis in die Stellung, die in Figur 3 dargestellt ist. Gleichzeitig mit der nun einsetzenden Zufuhr der Formluft über die Bohrungen 36 im Niederhalter 14 wird eine Sperreinrichtung 23 aktiviert (Pfeilrichtung 28), sodass sie den Sperrkolben 18 arretiert und über die Bohrungen 24 und 37 wird Druckluft auf die Innenseite der Dichtung 39 gegeben, die sich beim Druckaufbau nach außen verformt oder verschiebt und den Spalt 43 zwischen dem Sperrkolben 18 und der Niederhalterbohrung 19 schließt. Je nach den optimalen Verfahrensanforderungen für den zu formenden Behälter 6 kann eine Weiterfahrt des Streckhelfers 15 während der Formluftzufuhr, wie strichpunktiert in Fig. 3 angedeutet, erfolgen. Die Formluft erzeugt dabei nur eine geringe Gegenkraft auf den Streckhelfer 15 als Produkt aus Druck und Querschnitt der Stange 16, die von der Antriebseinrichtung 26 aufgebracht werden muss. Der Bedarf an Formluft ist minimiert, da der Raum innerhalb des Niederhalters 14 nicht gefüllt werden muss, bedingt durch den Sperrkolben 18.
Nach dem Ausformen der Behälter 6 wird die Innenseite der Dichtung 39 über das Ventil 40 entlüftet. Es erfolgt nun ein sehr rascher Abbau der Formluft im Formnest, da diese einerseits durch die Bohrungen 36 abgeleitet werden kann, andererseits aber auch über die entlastete Dichtung 38 und den Spalt 43 zwischen Sperrkolben 18 und Bohrung 19 hinwegströmt und über die Entlüftungsbohrungen 27 ins Freie geleitet wird. Die Sperreinrichtung 23 wird gelöst (Pfeilrichtung 29) und der Streckhelfer 15 und der Sperrkolben 18 werden zurückbewegt.

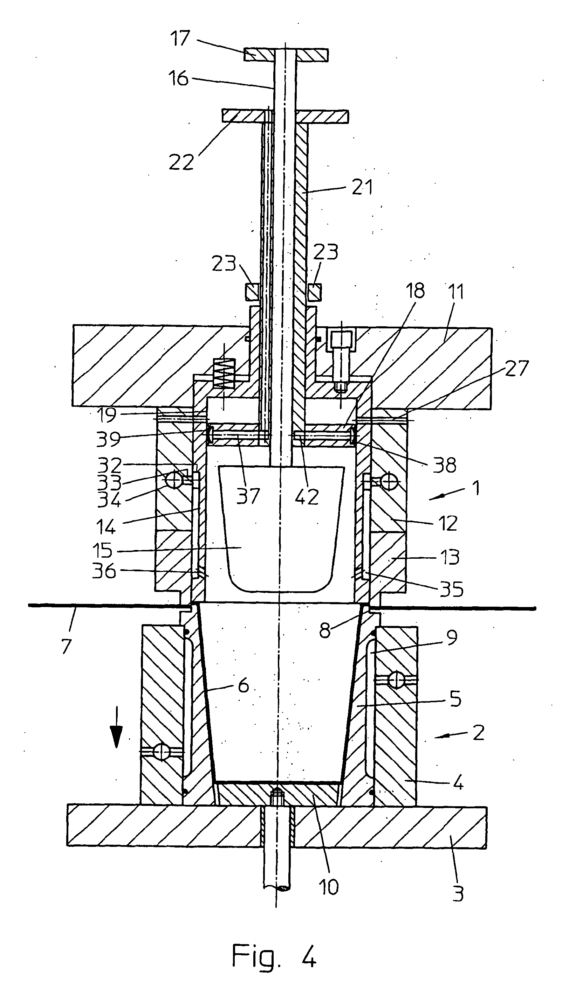

Nach dem Auskühlen der Behälter 6 werden diese bei beiden Ausführungsformen des Formwerkzeuges bei kombiniert formenden und stanzenden Formwerkzeugen ausgestanzt (Lage in Figur 4 dargestellt) und bei geöffnetem Formwerkzeug ausgeworfen. Bei einem reinen Formwerkzeug bleiben sie mit der Folienbahn 7 verbunden und werden Nachfolgeeinrichtungen zugeführt

Figur 5 zeigt eine erste Gestaltungsform der Dichtung 39 in zwei Varianten und zwei Stellungen. Die Dichtung 39w ist u-förmig gestaltet und liegt mit ihren Schenkeln 44 an der Nut 38 dichtend an, während der Steg 45 membranartig gestaltet ist und sich bei Druckzufuhr durch die Bohrung 37 wölbt (Lage links dargestellt) und den Spalt 43 zwischen Halteplatte 30 bzw. Sperrkolben 18 und der Bohrung 19 im Niederhalter 14 dichtend überbrückt. Ohne Druck auf der Innenseite der Dichtung 39 verbleibt ein Spalt 43 zwischen Steg 45 und Bohrung 19 (Lage rechts dargestellt).

Figur 6 zeigt eine zweite Gestaltungsform der Dichtung 39 in zwei Varianten und zwei Stellungen. Die Dichtung 39 ist gewölbt oder bumerangförmig gestaltet und die beiden Schenkel 46 liegen an der Nut 38 an und dichten mit den Schenkelenden bei anstehendem Druck an der Nut 38 ab, während die Mitte 47 der Dichtung 39 sich wölbt und gegen die Wandung der Bohrung 19 drückt. Ohne Druck auf der Innenseite der Dichtung 39 verbleibt ein Spalt 43 zwischen Dichtung 39 und Bohrung 19 (Lage rechts dargestellt).

Figur 7 zeigt eine dritte Gestaltungsform der Dichtung 39 in zwei Varianten und zwei Stellungen. Die Dichtung 39 ist winkelförmig gestaltet und liegt mit ihrem einen Schenkel 48 an der Nut 38 an, während der andere Schenkel 49 rechtwinklig zu diesem verläuft und die Nut 38 abdeckt. Bei anstehendem Druck auf der Innenseite der Dichtung 39 wird der Schenkel 49 gegen die Bohrung 19 gedrückt, wobei bei dieser Gestaltung die Luft weiter in den Formraum 31 strömt. Da aber gleichzeitig die Formluft zugeführt wird und sich Druck im Formraum 31 aufbaut wird hierdurch eine Anpressung des Schenkels 49 an die Bohrung 19 unterstützt. Vor der Aufwärtsbewegung von Streckhelfer 18 bzw. Streckhelfer 15 muss bei dieser Gestaltung allerdings eine Abführung der Formluft über die Bohrungen 36 oder über die Stange 16 erfolgen, damit sich die Dichtung 39 wieder in Ausgangslage zurückzieht und die Aufwärtsbewegung ohne Reibung stattfinden kann.

Das Zurückziehen der Dichtung 39 in Ausgangslage wird dadurch erreicht, dass diese aus elastischem Material hergestellt wird. Es kann in allen drei Beispielen dadurch unterstützt werden, dass in die Dichtung 39 eine ringsum verlaufende Spiralfeder 50 eingearbeitet wird, wie dies bei der Gestaltung von Radialdichtungen vom Prinzip her bekannt ist. Diese Gestaltung ist jeweils auf der rechten Seite der Figuren 5 bis 7 dargestellt, die auch die Ausgangslage - ohne Druck auf der Innenseite der Dichtung 39-zeigt.

## Patentansprüche

1. Formwerkzeug zum Tiefziehen von Behältern (6) aus einer erwärmten Folienbahn (7) aus thermoplastischem Kunststoff, bestehend aus Oberteil (1) und Unterteil (2), wobei das Unterteil (2) die Formeinsätze (5) trägt und das Oberteil (1) pro Formnest einen Niederhalter (14) und einen darin verschiebbaren Streckhelfer (15), wobei in dessen ausgefahrener Stellung eine Abdichtung zwischen dem Streckhelfer (15) oder zwischen einem hinter dem Streckhelfer (15) angeordneten, separat zu diesem verschiebbaren Sperrkolben (18) und der Bohrung (19) im Niederhalter (14) über eine in einer Nut (38) im Streckhelfer (15) oder im Sperrkolben (18) angeordnete Dichtung (39) besteht, **dadurch gekennzeichnet, dass** Bohrungen (37) im Streckhelfer (15) oder verschiebbaren Sperrkolben (18) vorgesehen sind, worüber die Nut (38) mit einer Druckluftquelle (41) in Verbindung gebracht werden kann und die Dichtung (39) so ausgebildet ist, dass ein anstehender Druck diese gegen die Bohrung (19) im Niederhalters (14) drückt und die Abdichtung herbeiführt.

2. Formwerkzeug nach Anspruch 1, **dadurch gekennzeichnet, dass** am gegenüberliegenden Ende des Niederhalters (14) und in der Zwischenplatte (12) Entlüftungsbohrungen (27) angeordnet sind, die ins Freie führen.

3. Formwerkzeug nach Anspruch 2, **dadurch gekennzeichnet, dass** am der Folienbahn (7) zugewandten Ende des Niederhalters (14) Bohrungen (36) zum Zuleiten der Formluft münden.

4. Formwerkzeug nach Anspruch 2, **dadurch gekennzeichnet, dass** im Streckhelfer (15) Öffnungen (52) für die über eine Bohrung (51) in der Stange (16) zugeführte Formluft münden.

5. Formwerkzeug nach einem der Ansprüche 1 bis 4, **dadurch gekennzeichnet, dass** die Dichtung (39) eine im Querschnitt u-förmige Gestalt aufweist, wobei die beiden Schenkel (44) an der Nut (38) anliegen und der sie verbindende Steg (45) der Bohrung (19) im Niederhalter (14) zugewandt ist.

6. Formwerkzeug nach einem der Ansprüche 1 bis 4, **dadurch gekennzeichnet, dass** die Dichtung (39) eine im Querschnitt gewölbte oder bumerangförmige Gestalt aufweist, wobei deren beide Schenkel (46) an der Nut (38) anliegen und deren Mitte (47) der Bohrung (19) im Niederhalter (14) zugewandt ist.

7. Formwerkzeug nach einem der Ansprüche 1 bis 4, **dadurch gekennzeichnet, dass** die Dichtung (39) eine im Querschnitt winkelförmige Gestalt aufweist, wobei der eine Schenkel (48) an der Nut (38) anliegt und der andere Schenkel (49) der Bohrung (19) im Niederhalter (14) zugewandt ist.

8. Formwerkzeug nach einem der Ansprüche 5 bis 7, **dadurch gekennzeichnet, dass** die Dichtung (39) mit einer Spiralfeder (50) versehen ist, die eine Kraft entgegen der Kraft der über die Bohrungen (37) zugeführten Druckluft auf sie ausübt.

9. Formwerkzeug nach einem der Ansprüche 1 bis 8, **dadurch gekennzeichnet, dass** die Dichtung (39) im drucklosen Zustand einen Spalt (43) in der Größenordnung von 0,5 bis 3 mm zur Bohrung (19) im Niederhalter (14) bildet.

## Claims

1. A moulding tool for deep-drawing containers (6) from a heated sheet (7) made from thermoplastic plastic, including an upper section (1) and a lower section (2), wherein the lower section (2) supports the mould inserts (5) and the upper section (1) includes a blank holder (14) and a stretch aid (15) arranged movably therein for each mould cavity, wherein in the extended position thereof a seal is created between the stretch aid (15), or between a movable locking piston (18) arranged behind the stretch aid (15) and separately therefrom, and the hole (19) in the blank holder (14) via a gasket (39) arranged in a groove (38) in the stretch aid (15) or in the locking piston (18), **characterised in that** holes (37) are provided in the stretch aid (15) or the movable locking piston (18), via which the groove (38) is connectible to a source of compressed air (41), and the gasket (39) is designed such that a pressure generated presses it against the hole (19) in the blank holder (14) and establishes the seal.

2. The moulding tool according to claim 1, **characterised in that** ventilation holes (27) leading to the outside are arranged at the opposite end of the blank holder (14) and in the sandwich plate (12).

3. The moulding tool according to claim 2, **characterised in that** holes (36) for supplying the moulding air open in the end of the blank holder (14) facing the sheet (7).

4. The moulding tool according to claim 2, **characterised in that** apertures (52) for the moulding air supplied via a hole (51) in the rod (16) open in the stretch aid (15).

5. The moulding tool according to any of claims 1 to 4, **characterised in that** the gasket (39) has a u-shaped cross-section, wherein the two legs (44) are flush with the groove (38), and the fin (45) connecting them faces the hole (19) in the blank holder (14).

6. The moulding tool according to any of claims 1 to 4, **characterised in that** the cross-section of the gasket (39) is convex or shaped like a boomerang, wherein both legs (46) thereof are flush with the groove (38), and the middle (47) thereof faces the hole (19) in the blank holder (14).

7. The moulding tool according to any of claims 1 to 4, **characterised in that** the cross-section of the gasket (39) has an angled shape, wherein the one leg (48) is flush with the groove (38), and the other leg (49) faces the hole (19) in the blank holder (14).

8. The moulding tool according to any of claims 5 to 7, **characterised in that** the gasket (39) is provided with a helical spring (50) that exerts a force on the gasket against the force of the compressed air supplied via the holes (37).

9. The moulding tool according to any of claims 1 to 8, **characterised in that** when not under pressure the gasket (39) forms a gap (43) with the hole (19) in the blank holder (14) having a size in the range from 0.5 to 3 mm.

## Revendications

1. Outil de formage pour l'emboutissage de récipients (6) dans une bande de film chauffée (7) en matière thermoplastique, consistant en une pièce supérieure (1) et une pièce inférieure (2), la pièce inférieure (2) supportant les garnitures de moules (5) et la pièce supérieure (1) un serre-flan (14) par cavité de moule et un auxiliaire d'étirement (15) déplaçable dedans, en position sortie duquel une étanchéité est établie entre l'auxiliaire d'étirement (15) ou entre un piston de blocage (18) disposé derrière l'auxiliaire d'étirement (15) et déplaçable séparément de celui-ci et l'alésage (19) du serre-flan (14) grâce à un joint (39) disposé dans une gorge (38) de l'auxiliaire d'étirement (15) ou dans le piston de blocage (18), **caractérisé en ce que** des alésages (37) sont pratiqués dans l'auxiliaire d'étirement (15) ou dans le piston de blocage déplaçable (18), alésages par lesquels la gorge (38) peut être mise en liaison avec une source d'air comprimé (41) et que le joint (39) est réalisé de manière à ce qu'une pression se formant le comprime contre l'alésage (19) du serre-flan (14) et assure l'étanchéité.

2. Outil de formage selon la revendication 1, **caractérisé en ce qu'**à l'extrémité opposée du serre-flan (14) et dans la plaque intermédiaire (12), sont pratiqués des trous d'aération (27) qui mènent à l'air libre.

3. Outil de formage selon la revendication 2, **caractérisé en ce qu'**à l'extrémité du serre-flan (14) tournée vers la bande de film (7), débouchent des alésages (36) servant à acheminer l'air du moule.

4. Outil de formage selon la revendication 2, **caractérisé en ce que** des orifices (52) pour l'air du moule acheminé par un alésage (51) dans la barre (16) débouchent dans l'auxiliaire d'étirement (15).

5. Outil de formage selon une des revendications 1 à 4, **caractérisé en ce que** le joint (39) présente en section transversale une forme de U, les deux branches (44) reposant dans la gorge (38) et la traverse les reliant (45) étant tournée vers l'alésage (19) du serre-flan (14).

6. Outil de formage selon une des revendications 1 à 4, **caractérisé en ce que** le joint (39) présente en section transversale une forme bombée ou en forme de boomerang, ses deux branches (46) reposant dans la gorge (38) et son centre (47) étant tourné vers l'alésage (19) du serre-flan (14).

7. Outil de formage selon une des revendications 1 à 4, **caractérisé en ce que** le joint (39) présente en section transversale une forme angulaire, une branche (48) reposant dans la gorge (38) et l'autre branche (49) étant tournée vers l'alésage (19) du serre-flan (14).

8. Outil de formage selon une des revendications 5 à 7, **caractérisé en ce que** le joint (39) est équipé d'un ressort hélicoidal (50) qui exerce sur lui une force opposée à la force de l'air comprimé acheminé par l'intermédiaire des alésages (37).

9. Outil de formage selon une des revendications 1 à 8, **caractérisé en ce que** le joint (39) forme, à l'état hors pression, un intervalle (43) d'un ordre de grandeur de 0,5 à 3 mm par rapport à l'alésage (19) du serre-flan (14).
